# EUROPÄISCHE PATENTSCHRIFT

(11) **EP 0 675 853 B1**
(45) Veröffentlichungstag und Bekanntmachung des Hinweises auf die Patenterteilung: **14.05.1997**
(21) Anmeldenummer: 94902709.8
(22) Anmeldetag: 07.12.1993
(51) Int. Cl.: C01B 31/02

(54) **DIREKTGEWINNUNG VON KRISTALLINEN FULLERENEN AUS EINEM FULLEREDAMPF-RUSS-GEMISCH**
METHOD FOR OBTAINING CRYSTALLINE FULLERENES DIRECTLY FROM FULLERENE-VAPOUR/SOOT MIXTURES
PROCEDE D'EXTRACTION DIRECTE DE FULLERENES CRISTALLINS A PARTIR DE MELANGES DE GAZ DE FULLERENES ET DE SUIE

(30) Priorität: 22.12.1992 DE 4243566
(43) Veröffentlichungstag der Anmeldung: 11.10.1995
(73) Patentinhaber: HOECHST AKTIENGESELLSCHAFT, 65926 Frankfurt am Main (DE)
(72) Erfinder: RITTNER, Siegbert, D-64546 Mörfelden (DE); MOHN, Holger, D-65929 Frankfurt am Main (DE); DORN, Friederich-Wilhelm, D-50354 Hürth (DE)
(86) Internationale Anmeldenummer: EP9303446
(87) Internationale Veröffentlichungsnummer: WO9414704

(56) Entgegenhaltungen:
- WO-A-93/13014
- D.M. COX ET AL. 'ACS SYMPOSIUM SERIES 481 : "Fullerenes"' 1992 , AMERICAN CHEMICAL SOCIETY , WASHINGTON,DC,US siehe Seite 117 - Seite 125

## Beschreibung

Es ist bekannt, daß beim Verdampfen von Graphit im Lichtbogen in Anwesenheit von Helium ein fullerenhaltiger Ruß entsteht, der bis zu ca. 10 Gew.-% Fullerene enthält, wobei diese vorzugsweise aus den begehrten C₆₀- und C₇₀-Spezies bestehen.

Während dieser Verfahrensschritt technisch gut realisiert werden kann, stehen die aus der Literatur bekannten Aufarbeitungs- und Reinigungsverfahren, wie die Extraktion des Rußes z.B. mit Benzol oder Toluol mit anschließender Säulenchromatographie sowie die Sublimation technisch noch ganz am Anfang. Nachteilig bei der Extraktion und Chromatographie ist nicht nur der hohe Bedarf an Lösemitteln und ihre lästige Handhabung, sondern auch die relativ langen Verweilzeiten der Verbindungen auf den Säulen, die zu Produktschädigungen führen können. Zudem führt die anschließende Eindampfung der sehr verdünnten Eluate zu einem wenig ansehnlichen, kaum kristallinen Feststoff.

Die Sublimation der Fullerene aus dem fullerenhaltigen Ruß hat den prinzipiellen Vorteil, daß sie lösemittelfrei arbeitet. Sie ist jedoch wegen der besonderen stofflichen Eigenschaften, wie z.B. der niedrigen Dampfdrücke der Fullerene und der sehr hohen Temperaturen, die angewandt werden müssen, bisher über den Stand einer mikropräparativen Methode nicht hinausgekommen.

Zu den Schwierigkeiten bei der Sublimation zählen nicht nur der sehr hohe Energiebedarf, der generell bei Sublimationsprozessen erforderlich ist, sondern auch die verlustfreie Isolierung der Fullerene aus dem Ruß, die sich während der Abkühlung des Rußes an ihm kondensiert oder in ihm mehr oder weniger komplex eingebaut haben, was die Verdampfung kinetisch behindert. Hohe Temperaturen sind nötig, um die Fullerene mit genügend hoher Geschwindigkeit aus dem Ruß zu verdampfen.

Weiterhin muß auch auf die schlechte Wärmeleitfähigkeit des Rußes hingewiesen werden. Die Anwendung konventioneller Wärmeeintragstechniken ist zeitaufwendig und kann bei den erforderlichen Temperaturen zu Produktzersetzungen führen. Ein Fortschritt ist dabei zweifellos die Anwendung von Mikrowellenenergie, wie sie in einer Anmeldung P-Nr. 42 14 980.0 vorgeschlagen wurde.

Aufgabe der vorliegenden Erfindung war es, ein in den technischen Maßstab ausbaufähiges Isolier- und Reinigungsverfahren für kristalline Fullerene zu entwickeln, welches frei von den Nachteilen der bestehenden Verfahren ist.

Es wurde nun überraschenderweise gefunden, daß man Fullerene gewinnen kann indem man z.B. Fullerendampf-Ruß-Strom der aus dem Lichtbogen nach dem Verdampfen des Graphits austritt unter spezifischen Bedingungen ein Trägergas zumischt und danach den Ruß bei hoher Temperatur zur Abscheidung bringt. Hierbei verbleiben die Fullerene im heißen Trägergasstrom und können durch graduierte Abkühlung in Abscheidern oder Temperatur-Zonen in Fraktionen (C₆₀, C₇₀) separiert werden.

Die Erfindung betrifft somit ein Verfahren zur Abtrennung von Fullerenen aus einem Fullerendampf-Ruß-Gemisch, das dadurch gekennzeichnet ist, daß man ein Fullerendampf-Ruß-Gemisch mit Trägergas versetzt, den Ruß abtrennt und durch Abkühlung die in dem Trägergasstrom befindlichen Fullerene zur Abscheidung bringt.

Der z.B. im Lichtbogen oder durch einen Flammenprozeß, beispielsweise der Verbrennung von Benzol, gebildete Fullerendampf-Ruß-Strom wird mit einem Trägergasstrom vermischt und über ein temperaturfestes Filter geleitet, wobei die Rußpartikel abgetrennt/kompaktiert werden und das Trägergas die Fullerene mitnimmt. Danach wird der fullerenhaltige Trägergasstrom zur fraktionierten Fullerenabscheidung schrittweise abgekühlt.

Das Fullerendampf-Ruß-Gemisch aus dem Lichtbogen kann auch mit Hilfe von Zyklonen in den mit den Fullerenen beladenen Trägergasstrom und abgeschiedenen Ruß aufgetrennt werden und in die verschiedenen Fullerenspezies fraktioniert werden. Je nach gewünschtem Reinheitsgrad bzw. Fraktionierungsgrad wird man einen oder mehrere hintereinandergeschaltete Zyklone einsetzen.

Als Trägergase für den erfindungsgemäßen Prozeß kommen Edelgase wie Helium, Neon und Argon sowie andere inerte Gase in Frage. Grundsätzlich können für den erfindungsgemäßen Prozeß auch zwei oder mehrere der genannten Gase als Gemisch eingesetzt werden.

Der Volumenstrom des Trägergases kann in weiten Bereichen schwanken und ist im wesentlichen abhängig von der Geometrie der Lichtbogenapparatur. Dementsprechend ist die Strömungsgeschwindigkeit ebenfalls in weiten Bereichen variabel. Es kann bei einer Strömungsgeschwindigkeit von 0,1 = 10⁻¹ bis 10⁻² m/sec, bevorzugt von 3 bis 6•10⁻² m/sec, gearbeitet werden. Das Fulleren kann jedoch auch bei niedrigeren bzw. höheren Geschwindigkeiten ausgetragen werden.

Die Beladung des Trägergasstromes kann sowohl im Teilvakuum, als auch bei leichtem Überdruck stattfinden. Arbeitsdrücke im Bereich von 1 mbar bis 2 bar sind möglich, bevorzugt wird im Bereich des Umgebungsdrucks gearbeitet.

Auch die Temperatur des eingetragenen Gases kann in weiten Bereichen schwanken und wird sich danach richten welche Fullerenspezies isoliert werden sollen. Zur Isolierung von C₆₀ und/oder C₇₀ wird das Trägergas bevorzugt auf einen Temperaturbereich von 700 bis 1000°C vorgeheizt. Der Temperaturbereich, bei der die Vermischung des Fullerendampf-Ruß-Gemisches mit dem Trägergas stattfindet, kann oberhalb ca. 1 000°C liegen. Die Abscheidung der kristallinen Fullerene kann dagegen unterhalb von ca. 600°C stattfinden.

Im Sinne einer ökonomischen Arbeitsweise werden die zur Fulleren-Abtrennung aus dem Ruß verwendeten Edelgase (Trägergase) nach Abscheidung der Fullerene zurückgeführt.

Je nach eingestelltem Abkühlgradienten und Anzahl und Länge der Abscheidezonen können verschieden reine Fullerenfraktionen isoliert werden. Dabei sind die nach dem erfindungsgemäßen Verfahren gewonnenen Fullerene hervorragend kristallin, was für die Weiterverarbeitung von großem Vorteil ist.

Für die kristallinen Fullerene sind eine Fülle verschiedenster Einsatzgebiete denkbar.

Der erfindungsgemäße Prozeß ist lösungsmittelfrei, wobei die Bildung des Fullerendampf-Ruß-Gemisches im Uchtbogen verfahrenstechnisch direkt mit dem Fulleren-Isolierprozeß verknüpft ist. Dieses Verfahren geht somit nicht isoliert vom erkalteten fullerenhaltigen Ruß aus, wie es bei den säulenchromatographischen Naßverfahren oder bei der mikropräparativen Sublimation derzeit Praxis ist, sondern schließt sich direkt an die Bildung des Fullerengas-Ruß-Gemisches an. Das heiße Fullerengas-Ruß-Gemisch wird nicht erst abgekühlt, was die teilweise irreversible Kondensation der Fullerene im Ruß zur Folge hat und außerdem die Energie verbraucht, die zur Sublimation erneut zugeführt werden müßte, sondern es wird einer heißen Rußabscheidung zugeführt, um die Fullerene anschließend kontrolliert kondensieren zu können. Beim erfindungsgemäßen Prozeß, der unter spezifischen Temperaturen, Konzentrationen und fluiddynamischen Bedingungen geführt wird, muß für die Reinigung der Fullerene keine zusätzliche (teure) Energie zur Sublimation bzw. Lösemittelabtrennung aufgebracht werden, da sie bereits im Überschuß in dem aus dem Lichtbogen austretenden Fullerengas-Ruß-Strom vorhanden ist und somit direkt genutzt werden kann.

Ein weiterer entscheidender Fortschritt des neuen Verfahrens gegenüber den bekannten Reinigungsprozessen besteht darin, daß es beim erfindungsgemäßen Verfahren kaum zu einem Einbau oder Ablagerung der Fullerene im Ruß kommt, da der Ruß zur Fulleren-lsolierung vorher nicht auf Raumtemperatur (unter die Kondensationstemperatur der Fullerene) abgekühlt werden muß, wie dies bei den Lösungsverfahren der Fall ist.

Die folgenden Beispiele sollen die Erfindung näher erläutern:

### Beispiel 1

Aus einem mit 0,3 bar He gefüllten Reaktionsbehälter, in dem zwischen Graphitelektroden ein Lichtbogen brennt, wird mit einer Sonde ein Produktteilstrom abgezogen, in einer Mischstrecke mit Helium versetzt, so daß die Temperatur des Gemisches bei etwa 1 000°C liegt und durch ein Quarzrohr geleitet. Im vorderen Teil dieses Rohres befindet sich Quarzwolle, wobei dieser Rohrabschnitt mit einer Fritte abschließt, an welcher der Ruß kompakt abgeschieden wird, während der fullerenbeladene Heliumstrom in den zweiten Teil des Quarzrohres eintritt. Auch im zweiten Quarzrohrabschnitt befindet sich Quarzwolle, wobei dieser Apparateteil zum Abscheiden der kristallinen Fullerene dient.

Die abgetrennte Rußmenge betrug 22 g, es wurde bei einem Gesamtdruck in der Abscheidevorrichtung von etwa 0,03 bar und einer Temperatur am Ort der Fritte im Quarzrohr von 600°C gearbeitet.

In der Tabelle 1 sind die Mengen an gewonnenem Fulleren zusammengestellt.

**Tabelle 1:**

| Transport und Desublimation aus dem Lichtbogen Transportgas: He | | | |
|---|---|---|---|
| abgetrennte Rußmenge g | Fullerenanteil g | C₆₀ % | C₇₀ % |
| 22 | 1,21 | 78 | 22 |

### Beispiel 2

Es wurden parallel zu dem oben beschriebenen Versuchsaufbau Sublimationsversuche an fullerenhaltigem Ruß durchgeführt. Die Apparatur unterschied sich von der oben genannten nur dadurch, daß der Fullerendampf/Heliumstrom diesmal nicht direkt aus dem Lichtbogen entnommen wurde, sondern durch eine He-Trägergassublimation der Fullerene aus dem Ruß bei reduziertem Druck (ca. 100 mbar) und Temperaturen von 600°C dargestellt wurde.

Die fullerenhaltige Rußprobe befand sich dabei in einer Quarzrohrapparatur und wurde mittels elektrischem Rohrofen beheizt.

Mit dieser vereinfachten Versuchsanordnung konnte gezeigt werden, daß eine fraktionierte Kondensation -Trennung C₆₀/C₇₀ - prinzipiell möglich ist, wenn in der Kondensationszone diskrete Temperaturzonen eingestellt werden. Die Versuchsergebnisse sind in Tabelle 2 zusammengefaßt.

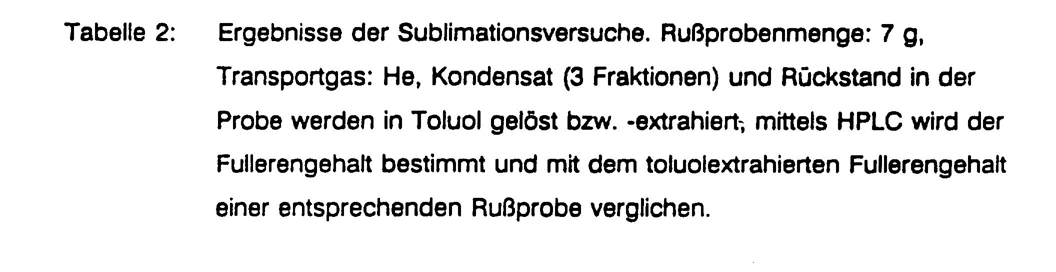

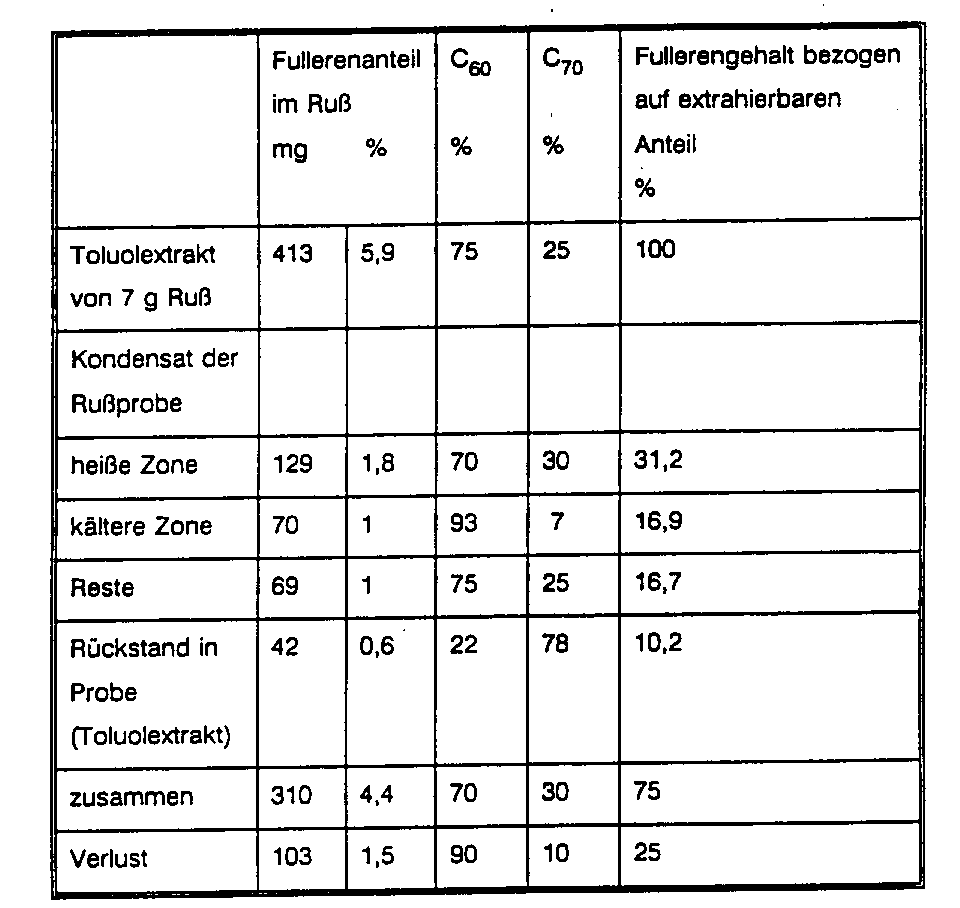

## Patentansprüche

1. Verfahren zur Abtrennung von Fullerenen aus einem Fullerendampf-Ruß-Gemisch, dadurch gekennzeichnet, daß man ein Fullerendampf-Ruß-Gemisch mit Trägergas versetzt, den Ruß abtrennt und durch Abkühlung die in dem Trägergasstrom befindlichen Fullerene zur Abscheidung bringt.

2. Verfahren nach Anspruch 1, dadurch gekennzeichnet, daß man als Trägergas Helium, Neon oder Argon verwendet.

3. Verfahren nach Anspruch 1 oder 2, dadurch gekennzeichnet, daß man Gemische der Trägergase verwendet.

4. Verfahren nach einem oder mehreren der Ansprüche 1 bis 3, dadurch gekennzeichnet, daß man die Zumischung des Trägergases zum heißen fullerenhaltigen Ruß oberhalb von 600°C vornimmt.

5. Verfahren nach einem oder mehreren der Ansprüche 1 bis 4, dadurch gekennzeichnet, daß die Beladung des Trägergases mit Fullerendampf im Druckbereich zwischen 1-2 000 mbar betrieben wird.

6. Verfahren nach einem oder mehreren der Ansprüche 1 bis 5, dadurch gekennzeichnet, daß man die Fullerene fraktioniert abscheidet.

7. Verfahren nach einem oder mehreren der Ansprüche 1 bis 6, dadurch gekennzeichnet, daß man die Fullerene in Zonen mit unterschiedlichen Temperaturen abscheidet.

## Claims

1. A method for isolating fullerenes from a fullerene vapor/soot mixture, which comprises adding carrier gas to a fullerene vapor/soot mixture, removing the soot and, by cooling, causing the fullerenes contained in the carrier gas stream to be deposited.

2. The method as claimed in claim 1, wherein the carrier gas used is helium, neon or argon.

3. The method as claimed in claim 1 or 2, wherein mixtures of the carrier gases are used.

4. The method as claimed in one or more of claims 1 to 3, wherein the admixture of the carrier gas to the hot fullerene-containing soot is effected above 600°C.

5. The method as claimed in one or more of claims 1 to 4, wherein loading of the carrier gas with fullerene vapor is carried out in the pressure range between 1 and 2000 mbar.

6. The method as claimed in one or more of claims 1 to 5, wherein the fullerenes are deposited by fractionation.

7. The method as claimed in one or more of claims 1 to 6, wherein the fullerenes are deposited in zones of different temperatures.

## Revendications

1. Procédé pour séparer des fullerènes à partir d'un mélange vapeur de fullerène-suie, caractérisé en ce qu'on ajoute un gaz porteur à un mélange vapeur de fullerène-suie, on sépare la suie et, par refroidissement, on sépare les fullerènes se trouvant dans le courant de gaz porteur.

2. Procédé selon la revendication 1, caractérisé en ce qu'on utilise comme gaz porteur de l'hélium, du néon ou de l'argon.

3. Procédé selon la revendication 1 ou 2, caractérisé en ce qu'on utilise des mélanges des gaz porteurs.

4. Procédé selon l'une ou plusieurs des revendications 1 à 3, caractérisé en ce qu'on procède à l'addition du gaz porteur à la suie chaude contenant des fullerènes à une température supérieure à 600°C.

5. Procédé selon l'une ou plusieurs des revendications 1 à 4, caractérisé en ce que l'introduction de la vapeur de fullerène dans le gaz porteur est réalisée sous une pression comprise dans l'intervalle de 1 à 2000 mbar.

6. Procédé selon une ou plusieurs des revendications 1 à 5, caractérisé en ce qu'on sépare les fullerènes par fractionnement.

7. Procédé selon une ou plusieurs des revendications 1 à 6, caractérisé en ce qu'on sépare les fullerènes dans des zones à température différente.
